# EUROPEAN PATENT APPLICATION

(11) **EP 4 560 291 A1**
(43) Date of publication of application: **28.05.2025**
(21) Application number: 23211043.7
(22) Date of filing: 21.11.2023
(51) Int. Cl.: G01N 15/10, G01N 15/12, G01N 15/14

(54) **METHOD, MARKER AND SYSTEM FOR CHARACTERISING A BIOLOGICAL SAMPLE**

(71) Applicant: Leica Microsystems CMS GmbH, 35578 Wetzlar (DE)
(72) Inventor: Alsheimer, Soeren, 35578 Wetzlar (DE)
(74) Representative: Schaumburg und Partner Patentanwälte mbB

(57) **Abstract**

A method for characterising at least one biological sample is provided. The method comprises the steps of generating an impedance readout of the biological sample, generating imaging information of the biological sample, and characterising the biological sample based on the impedance readout and on the imaging information. In further aspects, a marker and a system for characterising the biological sample is provided.

## Description

### Technical field

The invention relates to a method for characterising a biological sample and a marker and a system configured to carry out the method.

### Background

Image cytometry or imaging in flow-through using images cytometers or microscopes comprising a suitable flow cell and fluidics component allow for high-throughput analysis of large populations of cells. Similarly, single cell technologies like single cell RNA sequencing and other single cell multi-omic modalities enable the analysis of large numbers of single cells.

Image cytometry is a relatively recently field, that emerged between cytometry, which traditionally provides very high troughput (i.e. analysis of up to 200,000 events per second), but low content information, and (fluorescence) microscopy. For microscopy plexity and throughput are typically low, but very high information data are being generated in terms of spatial resolution, spectral resolution, temporal resolution.

Imaging cytometers or microscopes configured to perform imaging flow-through can be used to combine medium throughput with medium information content, which is a desirable combination as many phenotypes of interest are rare and subtle. This means that they cannot be detected on a platform that does not offer sufficient throughput or on a platform that does not offer sufficient information content. In this context information content may relate to spatial, temporal, spectral resolution, or plexity of the assay for example.

It remains highly desirable to further increase information content whilst at the same time increasing throughput in order to detect biological sample with rare and subtle properties.

### Summary

It is an object to provide a method and a marker for detailed characterisation of biological samples with high-throughput and a system for carrying out the method.

The aforementioned object is achieved by the subject-matter of the independent claims. Advantageous embodiments are defined in the dependent claims and the following description.

In a first aspect, a method for characterising at least one biological sample is provided. The method comprises the steps of generating an impedance readout of the biological sample, generating imaging information of the biological sample, and characterising the biological sample based on the impedance readout and on the imaging information. The imaging information of the biological sample may be generating before or after generating the impedance readout of the biological sample. In order to generate the imaging information, the biological sample may be imaged, for example by means of a fluorescent microscope, which may be done prior or after the generation of the impedance readout of the biological sample. This enables a comparison of the generated image with the generated impedance readout of the same biological sample, for example. Consequently, the biological sample may be particularly well characterised based on the impedance readout and the generated image. The biological sample may be a cell or a cell cluster, for example.

Preferably, the step of characterising the biological sample based on the impedance readout comprises generating imaging information based on the impedance readout. This enables a detailed characterisation of the biological sample. The imaging information may be imaging data or image analysis results such as segmentation results. The imaging data may comprise pixel values. Thus, the step of generating the imaging information may be carried out when characterising the biological sample. Further, the imaging information may be generated based on the impedance readout, rather than being generated by imaging the biological sample.

The method may comprise the step of introducing an impedance marker specific to a target analyte of the biological sample to the biological sample. During the step of introducing the impedance marker to the biological sample, the impedance marker may be introduced into the biological sample, or the impedance marker may be brought into the vicinity of the biological sample. The target analyte of the biological sample may be a target protein, for example, to which the impedance marker binds with high specificity and/or affinity.

Preferably, the biological sample is embedded within a hydrogel bead. In this case, the method may comprise a step of embedding the biological sample in a hydrogel bead. Further in the case the biological sample is embedded in a hydrogel bead, during the step of introducing the impedance marker to the biological sample, the impedance marker may be introduced into the biological sample, or the impedance marker may be brought into the vicinity of the biological sample. In this case, the vicinity of the biological sample may be delimited by the volume of the hydrogel bead. Thus, the impedance marker may be introduced to the hydrogel bead surrounding the biological sample. In this case the target analyte may be a secreted protein of a cellular biological sample, for example.

In a preferred embodiment, the impedance marker may be a part of the hydrogel bead. In this case, the hydrogel bead may comprise affinity reagents configured to specifically bind to a particular target analyte of the biological sample, for example, the affinity reagent may be covalently attached to a polymer of the hydrogel. In this case, the target analyte may be a secreted protein of the biological sample, that specifically binds to several affinity reagents attached to the hydrogel. The binding of the target analyte to the hydrogel may cross-link the hydrogel and cause a detectable change in impedance of the biological sample with the hydrogel bead.

In another preferred embodiment, the impedance marker may be comprised by the hydrogel bead. For example, the impedance marker may be a molecule that is digested or metabolised by the biological sample, in particular by a target analyte of the biological sample. This may be a secreted target analyte or a target analyte released by the biological sample upon apoptosis or lysis. For example, the impedance marker may be a nucleic acid or a lipid comprised by the hydrogel bead, the target analyte may be a DNase or a lipase released by the biological sample. Release of the target analyte may cause digestion of the impedance marker, which results in a detectable change of the impedance of the biological sample with the hydrogel bead.

Preferably, the step of introducing the impedance marker comprises introducing a large number of the impedance marker in order to specifically bind to a large number of the target analyte. The step of introducing the impedance marker may additionally involve removing excess or unbound impedance markers from the biological sample, for example, after the impedance marker has bound to the target analyte. This reduces background noise in the impedance readout.

Further, a plurality of different impedance markers may be introduced, with each impedance marker specifically binding to a different target analyte.

The impedance readout of the biological sample, in particular, comprises the biological sample with the impedance marker. Further, the impedance readout may be an impedance spectrum generated by impedance spectroscopy, in particular, dielectric spectroscopy, or electrical or electrochemical spectroscopy. The impedance spectrum may be generated by means of an impedance spectroscopy unit. Thus, the impedance readout may be an impedance spectrum of the biological sample itself or of the of the biological sample with the impedance marker bound to the target analyte.

The method enables specifically marking the target analyte of the biological sample with an impedance marker and subsequently detecting the impedance marker bound to the target of the biological sample, for example, by means of impedance spectroscopy to generate an impedance readout. Based on the impedance readout, the biological sample may be characterised, for example, whether the target analyte is present in the biological sample. Using an impedance marker and an impedance readout offers high sensitivity towards detecting the marked analyte within the biological sample and subsequently characterising the biological sample based on the impedance readout.

Preferably, the impedance readout is generated for a plurality of biological samples and the plurality of biological samples are sorted based on the characterisation. This enables efficient characterisation and processing of a plurality of biological samples. In particular, the biological samples are sorted based on the respective impedance readout. For example, the plurality of biological samples may be characterised sequentially in a flow through device such as a flow cell, preferably as part of a microfluidic device. Sorting the biological samples based on the characterisation may include directing flow in the flow through device such that a particular biological sample is directed into a particular direction or container different to other biological samples of the plurality.

Preferably, the impedance marker is configured to change the impedance of the biological sample. This enables an accurate characterisation of the biological sample. In particular, the impedance marker may be configured to change the impedance of specific parts or elements of the biological sample. Specifically, the impedance marker may cause a change of the impedance of the biological sample in response to the target analyte of the biological sample. Preferably, the impedance marker may catalyse a reaction that changes the impedance in particular in response to the target analyte of the biological sample. In this case, the impedance marker may comprise an enzyme, for example.

Preferably, prior to characterising the biological sample based on the impedance readout, pairs of training imaging information and training impedance readouts are generated for a plurality of biological standards and these pairs of training imaging information and training impedance readouts are correlated to each other, and wherein the imaging information is generated based on the correlated training imaging information and training impedance readouts. This enables efficiently generating the imaging information from the impedance readouts. The pairs of training imaging information and training impedance readouts may be generated by means of a system comprising both an imaging unit for generating the training imaging information and an impedance spectroscopy unit for generating the training impedance readouts. The biological standards may be synthetic and mimic biological samples. Further to the biological standards, an empty hydrogel bead may be used in addition to the biological standards in order to generate background image information and background impedance readout for biological samples embedded in the hydrogel bead. The training imaging information may be analysed and/or annotated by hand or by using deep learning approaches such as segmentation (using U-Net and StarDist), object detection (using YOLOv2), denoising (using CARE and Noise2Void), super-resolution microscopy (using Deep-STORM), and image-to-image translation (using label-free prediction - fnet, pix2pix and CycleGAN). Reference is made to von Chamier et al. 2021 NATURE COMMUNICATIONS | (2021) 12:2276 | https://doi.org/10.1038/s41467-021-22518-0 for relevant deep learning approaches. In particular, the analysed and/or annotated training imaging information may be correlated pairwise to the training impedance readouts of the respective biological standard. Based on the correlation, imaging information may be generated based on the impedance readout of a particular biological sample.

In a further aspect, a marker, in particular an impedance marker, for characterising a biological sample is provided. The marker comprises an affinity reagent configured to specifically bind to a target analyte of the biological sample, and a first label attached to the affinity reagent. The first label is configured to be detected by impedance spectroscopy. The marker enables efficiently marking and detecting features of biological samples to be investigated. In particular, the marker is configured to change the impedance of the biological sample. Further, the marker is preferably for use in the method described above.

Preferably, the second label attached to the affinity reagent, wherein the second label is configured to be detected optically. This enables marking target analytes of biological samples with a single marker and accurately detecting the marker and therefore the target analyte with two independent detection techniques. In particular, the second label is configured to be detected by means of an imaging unit such as a microscope.

Preferably, the first label comprises a polymer. This enables efficient detection by impedance spectroscopy and therefore efficient generation of the impedance readout. In particular, the first label may comprise lipids, fats, waxes, sterols, fat-soluble vitamins, monoglycerides, diglycerides, or phospholipids.

In a preferred embodiment, the polymer may be a polymer of a hydrogel. In this case, the impedance marker may comprise several of the affinity reagent attached to the polymer of the hydrogel. Thus, in this case the impedance marker may be a hydrogel bead.

Preferably, the monomers of the polymer are nucleotides or hydrocarbons. This enables efficient detection by impedance spectroscopy and therefore efficient generation of the impedance readout. In particular the hydrocarbons may be aromatic hydrocarbons, such as styrene. Thus, the first label may comprise polystyrene, for example, as polystyrene beads. Alternatively or in addition, the first label may comprise nucleic acids.

In a further aspect, a system for characterising a biological sample is provided. The system comprises means configured to carry out the method described above. Preferably, the biological samples to be characterised are each embedded in hydrogel beads.

Preferably, the system comprises a flow channel for carrying the biological sample in a fluid, the flow channel having an imaging space and an analysis space. Further, the system comprises an imaging unit configured to receive detection light emitted by the biological samples, in particular the impedance marker, in the imaging space. In addition, the system comprises an impedance spectroscopy unit configured to determine the impedance of the biological samples in the analysis space. This enables efficiently characterising the biological sample.

In particular, the flow channel of the system may comprise means to transport the fluid through the flow channel and therefore transport the biological sample. The impedance spectroscopy unit may generate an impedance spectrum or an impedance readout, in particular of the biological sample with impedance markers in the analysis space. The impedance spectroscopy unit may comprise electrodes arranged in the analysis space.

Preferably, the flow channel is a microfluidic channel, in particular a closed microfluidic channel. This enables efficient characterisation of biological samples by the system. In particular, the system may comprise a microfluidic device.

Preferably, the imaging unit comprises a light sheet microscope or a spinning disc microscope. This enables efficiently generating images of biological samples in the imaging space. particular, the microscopes may be configured to capture a z-stack of the biological sample in the imaging space.

Preferably, the system comprises a sorting unit for sorting biological samples. This enables efficiently characterising and processing of a large number of biological samples. The sorting unit may be arranged and configured to sort the biological samples in different flow channels, for example. Preferably the sorting unit is downstream of the imaging space and analysis space.

Preferably, the system comprises the marker described above. In addition, the system may comprise a liquid handling unit for introducing the marker in the biological sample.

### Short Description of the Figures

Hereinafter, specific embodiments are described referring to the drawings, wherein:
- Figure 1: is a schematic view of a several samples and corresponding imaging information and impedance spectra,
- Figure 2: is a schematic view of impedance markers,
- Figure 3: is a schematic view of an impedance marker attached to a polymer,
- Figure 4: is a schematic view of an impedance marker embedded in a hydrogel bead,
- Figure 5: is a flow diagram of a method for characterising at least one biological sample,
- Figure 6: is a schematic illustration of a system for characterising a biological sample, and
- Figure 7: is a schematic illustration of a system for characterising a biological sample with a cell sorter.

### Detailed Description

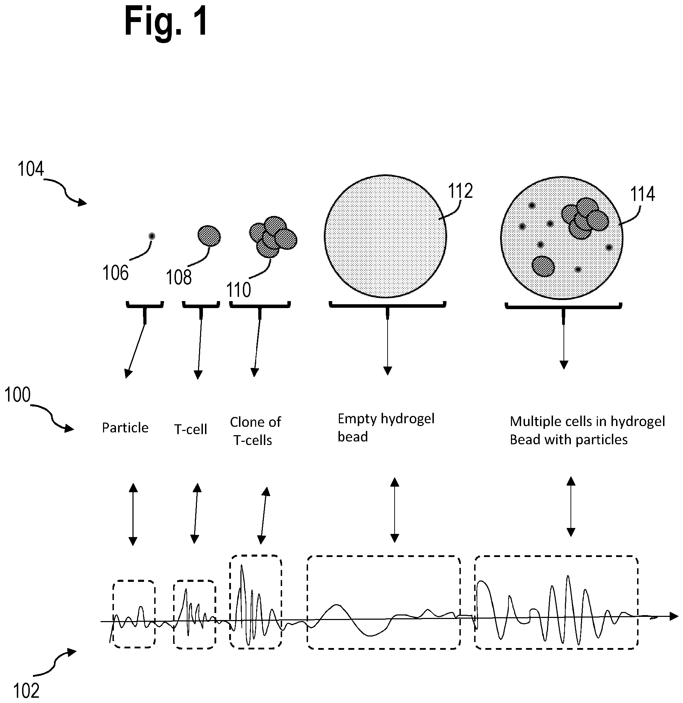

Figure 1 is a schematic view of several biological standards or biological samples 100 and corresponding impedance spectra 102 and schematically shows representations of imaging data 104. The standards or samples 100 as visualised in the imaging data 104 may include particles 106 such as viruses or organic molecules. Further, the standards or samples 100 may comprise a cell 108, such as a T-cell. The standards or samples 100 may also comprise a cell cluster 110, such as a cluster of T-cell clones. The example biological samples 106, 108, 110 may be embedded individually or in any combination in a hydrogel bead 112 to generate an embedded biological standard or sample 114. For each standards or samples 100 a corresponding impedance spectrum 102 or readout may be determined. The impedance spectra 102 are measurements of impedance of the respective biological standard or sample 100 conducted over a wide range of excitation frequencies.

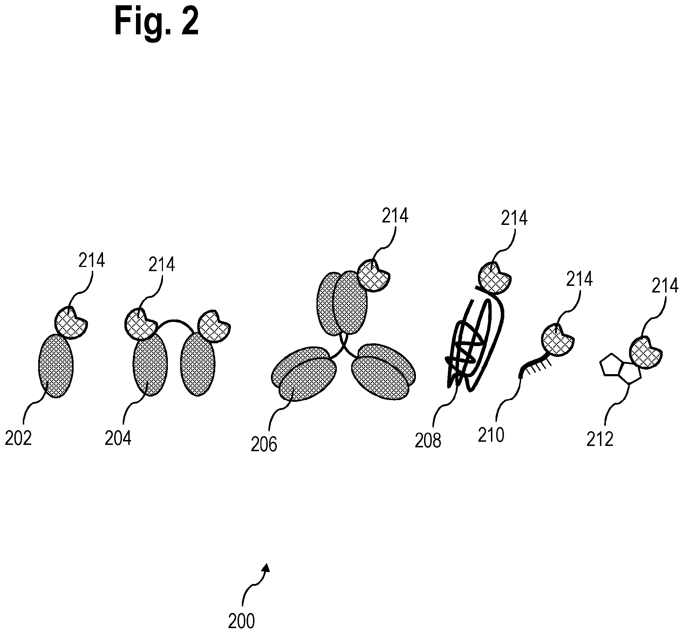

Figure 2 is a schematic view of impedance markers 200 configured to be detected by impedance spectroscopy. The impedance markers 200 comprise affinity reagents 202, 204, 206, 208, 210, 212. The affinity reagent 202 is an antibody fragment, the affinity reagent 204 is a dimeric antibody fragment the affinity reagent 206 is an antibody, the affinity reagent 208 is a nucleic acid based aptamer, the affinity reagent 210 is an oligonucleotide, and the affinity reagent 212 is a small molecule. The affinity reagent is configured to specifically bind to a target analyte of the biological sample 100. The target analyte may be a protein of the biological sample 100, for example. The affinity reagent may also be a polymeric binder configured to specifically bind a target analyte.

Each marker 200 comprises at least one first label 214 configured to be detected by impedance spectroscopy. For example, the first label 214 is a polymer with a unique impedance spectrum, or with a particularly high or low impedance compared to the biological samples 100. In particular, the first label 214 may be a polymer such as nucleic acid or a polystyrol.

Alternatively or in addition, the first label 214 may comprise fatty acids, lipids (e.g. phosphatidylcholine), cholesterol and chosterol-derivatives, waxes, and/or polyynes.

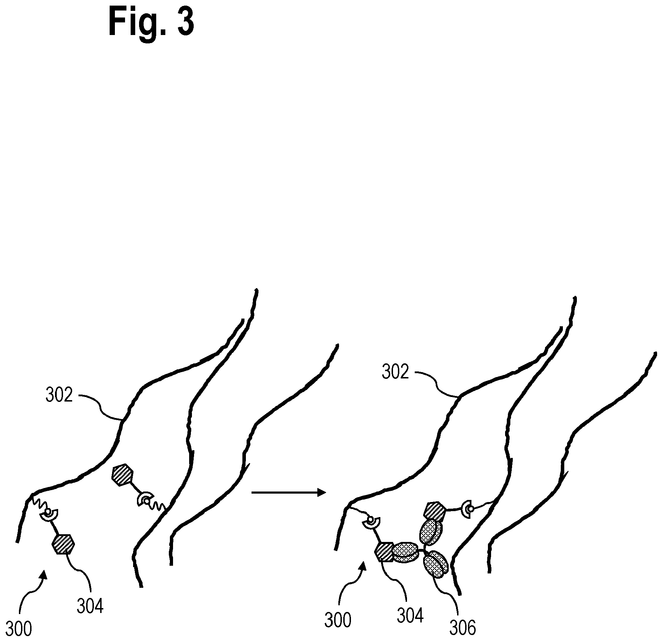

Figure 3 is a schematic view of an impedance marker 300 attached to a polymer 302, in particular of a hydrogel. The impedance marker 300 comprises an affinity reagent 304. A biological sample may be embedded in a hydrogel bead comprising the polymer 302. In particular, the polymer 302 of the hydrogel bead comprises a plurality of the affinity reagents 304 attached to the polymer 302. The affinity reagent 304 is configured to specifically bind to a target analyte, such as a secreted protein 306 of the embedded biological sample. The secreted protein 306 may be an antibody, for example. Binding of the protein 306 to the affinity reagent 304 cross-links the polymer 302 of the hydrogel. This causes the impedance of the hydrogel bead to change detectably due to the presence of the target analyte.

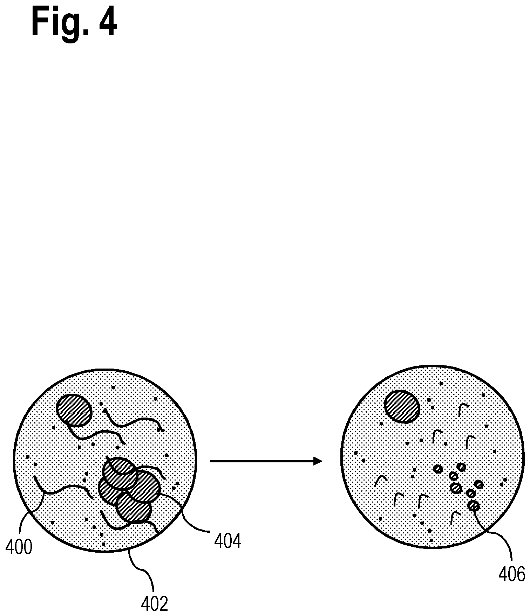

Figure 4 is a schematic view of an impedance marker 400 embedded in a hydrogel bead 402 together with a biological sample 404. Upon lysis of the biological sample 404, a target analyte such as an enzyme 406 may be released from the biological sample 404. The enzyme 406 digests the impedance marker 400, which causes a detectable change of the impedance of the hydrogel bead 402 with the biological sample 404. The impedance marker 400 may be an oligonucleotide, for example, and the enzyme 406 may be a DNase.

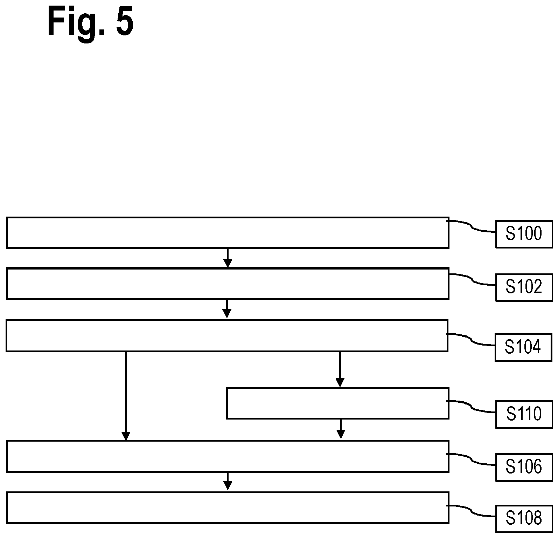

Figure 5 is a flow diagram of a method for characterising at least one biological sample 100. The method starts with step S100. In the optional step S102 an impedance marker 200, 300, 400 specific to a target analyte of a biological sample 100 is introduced to the biological sample 100. The target analyte may be within the biological sample 100, in which case the impedance marker 200, 300, 400 may be introduced into the biological sample 100. In case the impedance marker 200, 300, 400 comprises an affinity reagent, the impedance marker 200, 300, 400 may bind specifically to the target analyte by means of the affinity reagent.

The biological sample 100 may be provided embedded in a hydrogel bead, in which case a polymer of the hydrogel bead may comprise the impedance marker. Alternatively, the impedance marker 200, 300, 400 may be introduced to the biological sample 100 by introducing the impedance marker 200, 300, 400 to the hydrogel bead and bringing the impedance marker 200, 300, 400 in close proximity with the biological sample.

The biological sample 100 and the impedance marker 200, 300, 400 may interact, in particular, as discussed in conjunction with Figures 2 to 4.

In a step S104 an impedance readout is generated of the biological sample 100 or the biological sample 100 embedded within a hydrogel bead, in particular, together with the impedance marker. The impedance readout may comprise an impedance spectrum, generated by impedance spectrometry, for example.

In step S106 the biological sample 100 is characterised based on the impedance readout generated in step S104. For example, the biological sample 100 may be characterised by the presence of the target analyte in the biological sample 100 as determined by the presence of the impedance marker in the impedance spectrum.

The method ends in step S108.

Preferably, in step S104, the biological sample 100 may also be imaged optically, for example by means of a microscope. In this case, the biological sample 100 may be additionally characterised in step S106 based on the imaging data generated in S104.

As a further option, in step S106, characterising the biological sample 100 may comprise generating imaging information based on the impedance readout of the biological sample 100. When the imaging information is generated in step S106, the biological sample 100 is preferably not imaged in previous step S104.

In particular, the generating the imaging information in step S106 may be based on training information correlated in a further optional step S110. In step S110 pairs of training imaging information and training impedance readouts are generated for a plurality of biological standards. The biological standards may be configured to mimic the biological samples 100. The pairwise generation of training imaging information and impedance readouts enables in particular correlating the impedance spectra to the imaging information. Thus, features of interest identified in particular images of the imaging information may be correlated to the respectively paired impedance readout. In step S106 the correlation determined based on the training information enables generating imaging information in step S106 from the impedance readouts generated in step S104. The generated imaging information may comprise specific imaging data, such as pixel values or image analysis results, such as image segmentation or image classifications results. Step S110 may be carried out at any point after step S100 and prior to step S106.

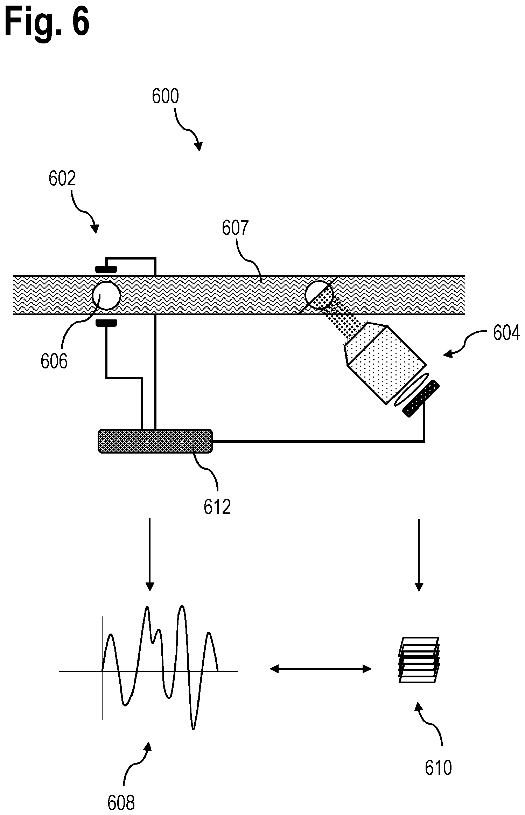

Figure 6 is a schematic illustration of a system 600 for characterising a biological sample 100, in particular configured to carry out the method according to Figure 5. The system 600 comprises an impedance spectroscopy unit 602 and an imaging unit 604. The system 600 further comprises a flow channel 607 for transporting, in particular embedded, biological samples 606 in a fluid. By means of the impedance spectroscopy unit 602 an impedance readout 608 of biological samples 606 transported through an analysis space of the channel 607 may be generated. Further, by means of the imaging unit 604, such as a microscope, in particular a light sheet microscope, (2D) imaging information 610 of the biological samples 606 transported through an imaging space of the channel 607 may be generated. In case a plurality of 2D imaging information of one biological sample 606 is generated while the biological sample 606 is transported through the imaging space of the channel 607, three-dimensional image information of the biological sample 606 may be obtained. The system 600 may further comprise a control unit 612, in particular configured to control the system 600 to carry out the method according to Figure 5.

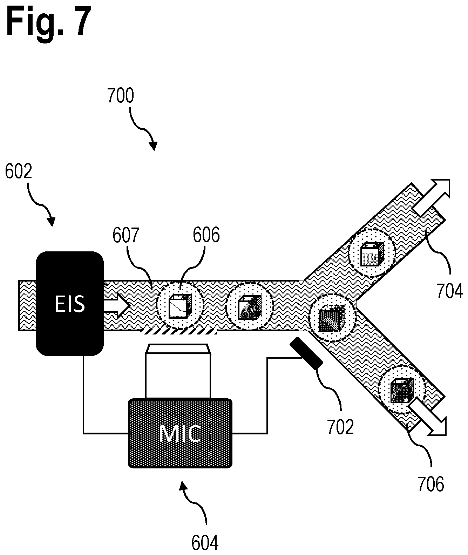

Figure 7 is a schematic illustration of a system 700 for characterising a biological sample 100 with a cell sorter 702, and in particular configured to carry out the method according to Figure 5. The system 700 enables sorting the characterised biological samples 606 into two sorting channels 704, 706 by means of the cell sorter 702. Thus, biological samples 606 that have been characterised at least based on their impedance readout generated by means of the impedance spectroscopy unit 602 may be sorted according to their characterisation into either the channel 704 or the channel 706.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100, 404, 606: Biological samples
- 102, 608: Impedance spectra
- 104, 610: Imaging data
- 106: Particle
- 108: Cell
- 110: Cell cluster
- 112, 402: Hydrogel bead
- 114: Embedded biological sample
- 200, 300, 400: Impedance markers
- 202: Antibody fragment
- 204: Dimeric antibody fragment
- 206: Antibody
- 208: Aptamer
- 210: Oligonucleotide
- 212: Small molecule
- 214: Label
- 302: Polymer of a hydrogel
- 304: Affinity reagent
- 306: Secreted protein
- 406: Enzyme
- 600, 700: System for characterising a biological sample
- 602: Impedance spectroscopy unit
- 604: Imaging unit
- 607: Flow channel
- 612: Control unit
- 702: Cell sorter
- 704, 706: Sorting channels

## Claims

1. A method for characterising at least one biological sample (100), comprising the following steps:
generating an impedance readout of the biological sample (100),
generating imaging information of the biological sample (100), and
characterising the biological sample (100) based on the impedance readout and on the imaging information.

2. The method according to claim 1, wherein the impedance readout is generated for a plurality of biological samples (100) and the plurality of biological samples (100) are sorted based on the characterisation.

3. The method according to one of the preceding claims, wherein the impedance marker is configured to change the impedance of the biological sample (100).

4. The method according to one of the preceding claims, wherein an impedance marker (200, 300, 400) specific to a target analyte of the biological sample (100) is introduced to the biological sample (100).

5. The method according to one of the preceding claims, wherein prior to characterising the biological sample (100) based on the impedance readout, pairs of training imaging information and training impedance readouts are generated for a plurality of biological standards (100) and these pairs of training imaging information and training impedance readouts are correlated to each other, and wherein the imaging information is generated based on the correlated training imaging information and training impedance readouts.

6. A marker (200, 300) for characterising a biological sample (100) comprising:
an affinity reagent configured to specifically bind to a target analyte, and
a first label (214) attached to the affinity reagent,
wherein the first label (214) is configured to be detected by impedance spectroscopy.

7. The marker according to claim 6, comprising a second label attached to the affinity reagent, wherein the second label is configured to be detected optically.

8. The marker according to claim 6 or 7, wherein the first label comprises a polymer (302).

9. The marker according to claim 8, wherein the monomers of the polymer (302) are nucleotides or hydrocarbons.

10. A system (600, 700) for characterising a biological sample, the system comprising means configured to carry out the method according to one of the claims 1-5.

11. The system according to claim 10, comprising
a flow channel (607) for carrying the biological sample (100, 606) in a fluid, the flow channel (607) having an imaging space and an analysis space,
an imaging unit (604) configured to receive detection light emitted by the biological samples (100, 606) in the imaging space, and
an impedance spectroscopy unit (602) configured to determine the impedance of the biological samples (100) in the analysis space.

12. The system according to claim 11, wherein the flow channel (607) is a microfluidic channel.

13. The system according to one of the preceding claims 11 or 12, wherein the imaging unit (604) comprises a light sheet microscope or a spinning disc microscope.

14. The system according to one of the preceding claims 10 to 13, comprising a sorting unit (702) for sorting biological samples (100, 606).

15. The system according to one of the preceding claims 10 to 14, comprising the marker (200, 300, 400) according to one of the claims 6 to 9.
